(19) Europäisches Patentamt / European Patent Office / Office européen des brevets

(11) **EP 2 605 009 B1**

(12) **FASCICULE DE BREVET EUROPEEN**

(45) Date de publication et mention
de la délivrance du brevet:
**29.11.2017 Bulletin 2017/48**

(51) Int Cl.:
**G01N 29/26** *(2006.01)*  **G01N 29/06** *(2006.01)*
**G01N 29/07** *(2006.01)*  **G01N 29/22** *(2006.01)*

(21) Numéro de dépôt: **12197247.5**

(22) Date de dépôt: **14.12.2012**

(54) **Dispositif de contrôle ultrasonore multiélément non destructif**

Vorrichtung zur zerstörungsfreien Gruppenstrahler-Ultraschallkontrolle

Device for non-destructive array ultrasonic testing

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.12.2011 FR 1161848**

(43) Date de publication de la demande:
**19.06.2013 Bulletin 2013/25**

(73) Titulaire: **Institut de Soudure
93420 Villepinte (FR)**

(72) Inventeurs:
- **Abittan, Elie**
  **95360 Montmagny (FR)**
- **Cence, Michel**
  **93150 Blanc-Mesnil (FR)**
- **Roue, David**
  **75014 Paris (FR)**

(74) Mandataire: **Regimbeau
20, rue de Chazelles
75847 Paris Cedex 17 (FR)**

(56) Documents cités:
**EP-A1- 0 709 673     US-A1- 2008 314 153**

- **BISBEE ET AL: "Enhanced methodologies used for the assessment of high-temperature header girth welds", INTERNATIONAL JOURNAL OF PRESSURE VESSELS AND PIPING, ELSEVIER SCIENCE PUBLISHERS, BARKING, GB, vol. 83, no. 11-12, 1 novembre 2006 (2006-11-01), pages 835-845, XP027956772, ISSN: 0308-0161 [extrait le 2006-11-01]**
- **CHARLES BRILLON ET AL: "TOFD Inspection with Phased Arrays", 17<TH> WORLD CONFERENCE ON NONDESTRUCTIVE TESTING, SHANGHAI, CHINA -, 28 octobre 2008 (2008-10-28), pages 1-7, XP055035914,**

**Description**

DOMAINE TECHNIQUE GENERAL DE L'INVENTION

La présente invention concerne le domaine des techniques de contrôle non destructif mettant en oeuvre une méthode ultrasons à partir de techniques TOFD et Phased Array.

De façon pragmatique, dans l'industrie, la maîtrise de la qualité d'un matériau et des assemblages soudés passe par la connaissance des défauts susceptibles d'affecter les constructions, des conséquences de ces défauts sur l'intégralité des structures et des moyens pour les identifier.

Ainsi, de nombreuses solutions de contrôle volumique font appel à la méthode ultrasons et, plus particulièrement ces dernières années, aux techniques TOFD et Phased-Array (multiéléments), notamment dans le cadre du remplacement de la méthode gammagraphique. On trouvera un aperçu de quelques documents représentatifs de l'état de la technique en la matière, à la fin de la présente description.

ETAT DE LA TECHNIQUE

TOFD conventionnel

La technique TOFD -"Time of Flight Diffraction" - est une technique de contrôle non destructif ultrasonore par transmission, apparue dans les années 70.

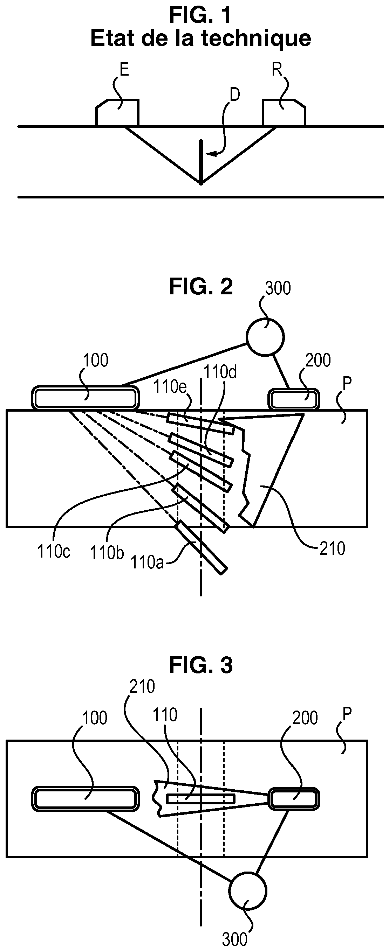

Elle consiste essentiellement à exploiter les ondes de diffractions générées par les extrémités de défauts plans. Elle procède par balayage(s) d'une pièce à contrôler en utilisant des traducteurs distincts à l'émission et réception (généralement de même caractéristiques: type d'ondes, angle de réfraction, fréquences) disposés de façon à optimiser les phénomènes de diffraction (PCS). On a illustré schématiquement sur la figure 1 annexée, un système ainsi connu de l'état de la technique. Sur la figure 1 on a référencé E un traducteur émetteur monoélément et R un traducteur récepteur monoélément. Ces deux traducteurs sont posés sur la surface d'une pièce à analyser comportant un défaut D.

Après s'être principalement développée dans les pays anglo-saxons, elle voit son utilisation s'intensifier aujourd'hui en France, notamment avec la mise en place d'une normalisation européenne et, plus récemment, une forte implication pédagogique et certifiante de la COFREND (Confédération Française des Essais Non Destructifs).

Cette technique est reconnue pour ses capacités à permettre la visualisation et l'analyse des phénomènes de diffraction imputés à une diffusion omnidirectionnelle d'ondes issues de l'interaction d'un faisceau ultrasonore et d'une discontinuité.

Par son principe, la technique génère plusieurs modes vibratoires qui, en fonction de la nature du réflecteur et sa position relative au faisceau ultrasons émis, peuvent aussi engendrer des phénomènes d'interaction de l'ordre du spéculaire voire de phénomènes modaux (cf. bibliographie TINDT2008).

En règle générale, les sondes E et R sont montées en vis-à-vis (en configuration tandem). L'émission d'ondes de compression (L) à grande ouverture est préconisée.

A cet égard, les normes européennes (cf. bibliographie générale) encadrent les conditions opératoires d'obtention du phénomène de diffraction.

Dans son utilisation, la technique est une simple approche géométrique basée sur des mesures de temps de vol d'échos diffractés ou réfléchis, qui se réfère souvent à la présence de signaux singuliers de transmission directe, d'ondes sous-jacentes à la surface de contrôle (onde latérale) ou indirecte, d'ondes réfléchies sur la paroi opposée (écho de fond).

Selon l'objectif visé, les plans de sondage utilisent des balayages (encodés ou automatisés) réalisés sur la surface de la pièce inspectée:

- antiparallèles, donnant accès à des imageries de type D-scan (perpendiculaire à la direction de propagation du faisceau)
- parallèles donnant accès à des imageries de type B-scan (parallèle à la direction de propagation du faisceau)
- créneaux, voire hélicoïdales (pour un cas de contrôle de tube) et donnant accès à des imageries de type C-scan, B-scan et D-scan

Les conditions d'utilisation optimales du TOFD sont celles du balayage parallèle en zone d'intersection des faisceaux des traducteurs émetteur E et récepteur R.

Les conditions d'interaction faisceau/défaut sont définies par le faisceau émis.

Les performances de la technique en termes de couverture de zone examinée (zone morte en paroi interne et externe, localisations, mesures voire discrimination) diffèrent avec le plan de sondage et l'équipement de contrôle.

Lors de l'étude de performances d'un procédé TOFD (avec identification des « paramètres essentiels » au sens EN 473), on peut distinguer :

- 3 zones singulières dans l'épaisseur (paroi externe, volume, paroi interne)
- 5 modes de propagation [Ondes Latérales, Ondes Longitudinales issues d'Ondes Longitudinales (LL), Ondes Transversales issues d'Ondes Longitudinales (TL), Ondes Longitudinales issues d'Ondes Transversales (LT), Ondes Transversales issues d'Ondes Transversales (TT)]
- 2 types de réflecteurs (plan/volumique)
- 3 orientations principales pour les réflecteurs plans (verticale, inclinée, horizontale) et
- 3 positions latérales des réflecteurs/faisceaux émis (axé, désaxé, hors faisceau).

Selon l'objectif, on recherche la maîtrise des conditions d'obtention :

- des signaux de diffraction (LL *voire TL*) en tête et pied de défaut plan,
- de rupture, perturbation ou d'atténuation d'onde latérale (selon la géométrie de la pièce),
- de rupture (et/ou d'atténuation) de l'écho de fond.

Un examen TOFD mono-passage ne permet pas de connaitre avec précision la position du réflecteur dans le plan de propagation. La localisation précise du réflecteur ne peut être déterminée qu'à l'aide d'un passage TOFD parallèle.

Le TOFD peut être mis en oeuvre à des fins de détection et/ou de classification d'indications ultrasonores.

En contrôle de soudure (cf. bibliographie normes européennes soudure), lorsque les préparations de surface sont limitées et les contraintes de productivité importantes, sa mise en oeuvre en présence d'un cordon, est généralement réalisée par balayages antiparallèles au contact.

Quel que soit le plan de sondage, l'analyse des signaux s'appuie sur une méthodologie de détection, de classification et de mesure définie dans un code de construction et/ou une norme qui fixe les niveaux d'acceptation des indications selon une classe qualité de référence.

Le dimensionnement en longueur d'une indication - fonction du faisceau émis, des positions et nature du réflecteur - peut différer de celles du défaut physique. Il s'appuie sur une méthodologie conventionnelle (règle à -6dB de l'amplitude des maxima d'extrémité pour les indications longues ou du maxima pour les indications courtes)

Le dimensionnement en hauteur d'une indication s'appuie sur une méthodologie basée sur l'exploitation de la forme (mono ou bi composante), de la phase du signal ; de la nature du réflecteur (plan/volumique, enterré/débouchant) et de l'incidence des fronts d'ondes d'interaction.

La classification des indications ne conduit pas à définir la nature réelle d'un défaut. Elle s'exprime uniquement en termes d'indication :

- ponctuelle,
- débouchant ou non débouchant avec hauteur mesurable,
- débouchant ou non débouchant sans hauteur mesurable.

TOFD Phased Array

La technologie Phased Array consiste en un émetteur multiélément disposant d'une électronique spéciale lui permettant d'appliquer des lois de retard à chacun de ses éléments. Un émetteur multiéléments de type Phased Array peut donc réaliser les modes d'émission suivants :

- un balayage linéaire électronique, par commutation séquentielle des éléments de l'émetteur multiéléments permettant un déplacement du faisceau. Le balayage linéaire électronique permet de ne pas déplacer l'émetteur Phased Array là ou le mouvement d'un traducteur monoélément est nécessaire
- une focalisation électronique, basée sur l'utilisation de retards électroniques. Les retards ont un effet semblable à celui d'une lentille de focalisation et permettent de focaliser à différentes profondeurs. La focalisation électronique permet de n'utiliser qu'un seul émetteur Phased Array là ou plusieurs capteurs monoéléments avec différentes distances focales sont nécessaires,
- une déflexion électronique (ou balayage sectoriel), également basée sur l'utilisation des lois de retard. Ces dernières sont dans ce cas calculées pour donner au faisceau émis un angle d'incidence qui peut varier par simple modification de la loi de retard (ensemble des retards appliqués à chacune des voies concernées). La déflexion électronique permet de n'utiliser qu'un capteur pour des inspections nécessitant traditionnellement plusieurs capteurs travaillant à des angles différents.

Le balayage, la focalisation et la déflexion électronique peuvent être combinés..En contrôle de soudure, la majorité des procédés faisant appel à la technologie Phased Array utilise une technique pulse écho (l'émetteur fait également office de récepteur)en mode balayage sectoriel .

Concernant la technique TOFD à base de technologie Phased Array, l'essentiel des travaux du domaine exploite tant en émission qu'en réception des sondes en matériau piézo-composites avec une perte de résolution par rapport à l'imagerie du TOFD standard (moindre qualité d'amortissement des pièzo-composites par rapport aux céramiques monolithiques).

Le document EP 0709673 décrit un dispositif de contrôle ultrasonore non destructif comprenant au moins une paire de transducteurs, constituée d'un émetteur multiéléments et d'un récepteur monoélément.

Le document US 2008/0314153 décrit un système d'imagerie comprenant des moyens de déplacement d'un émetteur multiélément.

BASE DE L'INVENTION

Malgré les très nombreux travaux conduits en la matière et leurs capacités démontrées en théorie pour la détection, la localisation et la mesure de défauts, force est de constater que la mise en oeuvre de contrôle non destructif à base de TOFD multiéléments reste encore limitée dans l'industrie.

L'on notera en particulier que le document « 17th World Conférence on Nondestructive Testing, 25-28 Oct 2008, Shanghai, China - TOFD Inspection with Phased Arrays - Charles Brillon, Tim Armitt and Olivier Dupuis » souligne que les pistes d'application de sondes multiéléments à un contrôle de type TOFD jusqu'ici proposées ne donnent pas totalement satisfaction et requièrent encore des optimisations.

DEFINITION GENERALE DE L'INVENTION

La présente invention a pour objectif de développer une nouvelle technique exploitant plus largement et différemment les phénomènes de diffraction afin d'améliorer la précision de mesures, d'assurer un diagnostic plus fiable et d'étendre le périmètre d'utilisation des phénomènes de diffractions aux contrôles de matériaux à structure cristalline grossière voire anisotrope.

Le but précité est atteint dans le cadre de la présente invention grâce à un dispositif tel que défini en revendication 1 annexée.

Comme on l'exposera par la suite, la combinaison particulière d'un émetteur multiéléments et d'un récepteur monoélément fortement amorti présentant une bande passante supérieure à 80 % conforme à la présente invention permet de manière « a priori surprenante » d'améliorer largement les performances de détection par rapport aux nombreuses configurations jusqu'ici proposées.

La bande passante du récepteur monoélément est choisie avantageusement supérieure à 110%, préférentiellement supérieure à 120%.

Selon une caractéristique avantageuse de la présente invention, l'émetteur multiéléments est adapté pour générer des faisceaux d'ondes ultrasonores sous incidence oblique, couvrant une plage angulaire de l'ordre de 45°.

La paire de traducteurs précitée constitutive d'un dispositif de contrôle est de préférence adaptée pour être translatée parallèlement à une zone à inspecter. Les traducteurs émetteurs/récepteurs d'un dispositif peuvent être du même côté, ou de part et d'autre d'une zone à inspecter.

Le déplacement précité peut être un déplacement automatisé sur une trajectoire imposée ou un déplacement commandé manuellement sur une trajectoire encodée, c'est-à-dire sur une trajectoire identifiée et codée dans un référentiel d'espace connu afin de permettre un positionnement précis des défauts résultant de l'analyse.

La présente invention peut mettre en oeuvre plusieurs dispositifs de contrôle similaires ou différents (paramètres des sondes, positions des sondes, écartements,...).

Ces paires de traducteurs peuvent être en vis-à-vis, du même côté d'une zone analysée, par exemple du même côté d'une soudure à analyser, ou sur des côtés opposés de cette zone à analyser.

L'on peut ainsi prévoir une paire unique émetteur/récepteur dans laquelle l'émetteur et le récepteur sont situés d'un même côté d'une zone analysée, par exemple un cordon de soudure, ou sont situés sur des côtés opposés de cette zone analysée.

Et lorsqu'il est prévu plusieurs paires de traducteurs, pour chacune des paires respectivement l'émetteur et le récepteur peuvent être situés d'un même côté d'une zone analysée, par exemple un cordon de soudure, ou peuvent être situés sur des côtés opposés de cette zone analysée.

La présente invention concerne également un procédé tel que défini dans le jeu de revendications annexé.

Le procédé comprend également de préférence une étape consistant à assurer simultanément et/ou séquentiellement à la réception précitée par le récepteur monoélément, des étapes d'émission et de réception par l'émetteur multiéléments. Dans ce cas le système fonctionne en mode pulse écho.

Le procédé peut également mettre en oeuvre une étape au cours de laquelle l'émetteur multiéléments fonctionne en émettant des faisceaux combinés équivalent à un TOFD champ large.

La zone analysée dans le cadre de la présente invention peut-être par exemple une soudure et sa zone affectée thermiquement ou le matériau de base d'un composant.

Comme on l'exposera plus en détail par la suite, la présente invention propose une solution mixte en ce sens qu'elle combine un émetteur multiéléments et un récepteur monoélément, sous forme d'un montage hybride de sondes ultrasonores pilotées par une électronique avancée permettant de disposer simultanément des différentes configurations suivantes :

- TOFD sectoriel focalisé,
- pulse écho sectoriel focalisé et
- TOFD champ large.

DESCRIPTION DES FIGURES

D'autres caractéristiques, buts et avantages de la présente invention apparaitront à la lecture de la description détaillée qui va suivre et en regard des dessins annexés, donnés à titre d'exemples non limitatifs, et sur lesquels :

- la figure 1 représente schématiquement un dispositif de contrôle conforme à l'état de la technique,
- la figure 2 représente un dispositif conforme à la présente invention en place sur une pièce à analyser selon une vue en coupe selon un plan de coupe parallèle au plan de propagation des faisceaux d'ondes émis, illustrant un mode TOFD sectoriel focalisé conforme à la présente invention,
- la figure 3 représente une vue de dessus du même dispositif selon un plan perpendiculaire au plan de propagation,
- la figure 4 représente une vue selon un plan de coupe similaire à la figure 2 illustrant un mode pulse écho sectoriel focalisé,
- la figure 5 représente une autre vue similaire à la figure 2 illustrant un mode TOFD champ large,
- la figure 6 représente une vue similaire à la figure 3 selon un plan perpendiculaire au plan de propagation
- les figures 7A, 7B et 7C représentent un exemple de courbe de diffraction illustrant l'amplitude de diffraction mesurée en fonction de l'orientation angulaire du faisceau et illustrent figure 7A le seul point A de la courbe exploité en TOFD conventionnel, figure 7B la plage B de la courbe couverte avec un balayage anti-parallèle et figure 7C la plage C plus complète de la courbe couverte avec un balayage parallèle.

DESCRIPTION DETAILLEE DE L'INVENTION

Comme indiqué précédemment, la présente invention propose un dispositif de contrôle ultrasonore non destructif comprenant, comme illustré sur les figures 2 à 6 annexées, au moins une paire de traducteurs constituée d'un émetteur multiéléments 100 et d'un récepteur monoélément 200 fortement amorti à bande passante supérieure à 80 %, disposés sur une pièce P à inspecter.

L'émetteur multiéléments 100 et le récepteur monoélément 200 sont pilotés par un système électronique 300 de sorte que dans un mode principal illustré sur les figures 2 et 3, l'émetteur multiéléments 100 émette un faisceau d'ultrasons 110 possédant un front d'onde présentant une puissance constante sur sa section, déplacé électroniquement en mode sectoriel et le récepteur monoélément 200 reçoive les ondes ultrasonores provenant de la zone d'intérêt à analyser et résultant du faisceau d'ultrasons 110 émis par l'émetteur multiéléments 100.

Selon la représentation schématique de la figure 2 on distingue, à titre d'exemple, 5 faisceaux successifs 110a, 110b, 110c, 110d et 110e émis avec une incidence oblique progressivement croissante par rapport à une normale à la surface de la pièce analysée, de l'ordre de 45° à environ 80°.

L'émetteur multiéléments est conçu pour couvrir un secteur angulaire adapté à la couverture de zone sur l'épaisseur de la pièce.

Chaque faisceau d'ultrasons 110 possède un front d'onde présentant une puissance constante sur sa section. A cette fin, chaque faisceau 110 émis par un élément émetteur 100 est un faisceau cylindrique ou un faisceau convergent.

La sonde émettrice Phased Array est formée par la combinaison d'une part d'une pluralité d'éléments piézocomposites composant en combinaison l'émetteur multiéléments proprement dit 100 et d'autre part d'un sabot portant ces éléments piézo-composites et définissant l'incidence de l'onde émise dans la pièce à contrôler.

La réalisation d'un tel sabot est bien connue de l'homme de l'art pour des émetteurs multiéléments. Le sabot n'a donc pas été représenté sur les figures annexées afin de simplifier l'illustration et il ne sera pas décrit plus en détail par la suite.

De préférence les caractéristiques de l'émetteur multiéléments 100, c'est-à-dire les caractéristiques des éléments piézo-composites et du sabot, sont choisies pour permettre, autant que possible de disposer de faisceaux d'ondes longitudinales focalisés 110 dont la tache focale idéalement cylindrique présente un diamètre de l'ordre de 2 à 3mm dans la zone d'intérêt (ou, à défaut une largeur dans le plan de propagation de l'ordre de 2 à 3mm). Par ailleurs ces caractéristiques sont de préférence choisies pour générer des faisceaux 110 d'incidences obliques assurant une couverture de zone dans l'épaisseur de pièce avec un recouvrement, typiquement avec un pas de l'ordre de 2mm.

Dans le cadre de la présente invention l'émetteur multiéléments 100 est de préférence réalisé à base d'éléments piézo-composites et non pas d'éléments piézo-céramiques comme préconisé dans certains dispositifs de type TOFD Phase Array.

Par ailleurs les caractéristiques du traducteur récepteur monolithique à ondes longitudinales 200 sont choisies pour disposer de :

- une fréquence équivalente à la fréquence centrale de l'émetteur 100,
- un amortissement supérieur à 110%,
- une bande passante élevée,
  une incidence moyenne de 55°±25°,
- une divergence dans le plan de propagation permettant de couvrir l'épaisseur de la pièce (grande ouverture typiquement de l'ordre de 50° comme on le voit sur la figure 2), et
- une moindre ouverture dans le plan perpendiculaire au plan de propagation (comme on le voit sur la figure 3).

Sur les figures 2 à 6 annexées l'ouverture de détection du traducteur récepteur monoélément 200 dans le plan de propagation est illustrée sous la référence 210.

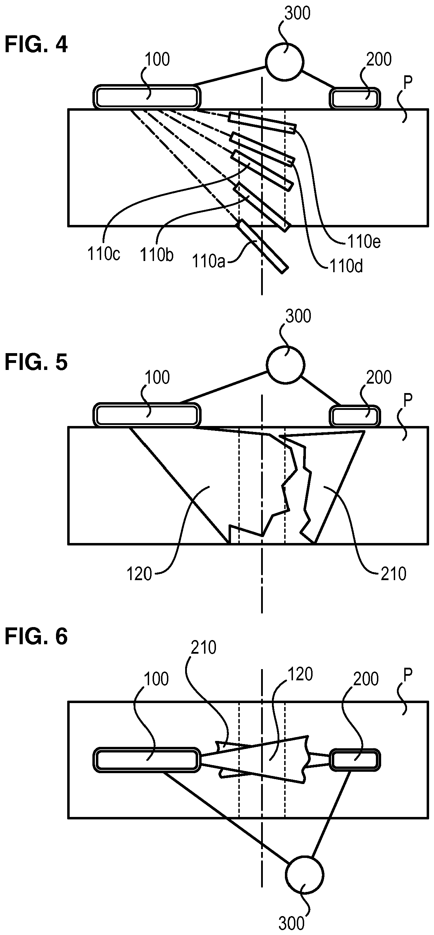

Selon l'invention, le système électronique 300 est également adapté pour piloter un mode secondaire consistant à assurer simultanément et/ou séquentiellement à la réception précitée par le récepteur monoélément 200 illustrée sur les figures 2 et 3, des étapes d'émission et de réception par l'émetteur multiéléments 100, comme illustré sur la figure 4. Dans ce cas le système fonctionne en mode pulse écho.

Toujours selon l'invention, le système électronique 300 peut en outre être adapté pour piloter un mode auxiliaire illustré sur les figures 5 et 6 dans lequel l'émetteur multiéléments 100 fonctionne en émettant des faisceaux combinés équivalent à un TOFD champ large 120 et le récepteur monoélément 200 à large ouverture 210 reçoit les ondes ultrasonores provenant de la zone d'intérêt à analyser et résultant du faisceau d'ultrasons à champ large 120 émis par l'émetteur multiéléments 100.

Une mécanique de balayage associée aux traducteurs émetteur 100 et récepteur 200, permet des acquisitions encodées 1 ou 2 axes lors du déplacement des traducteurs 100 et 200 sur la surface de la pièce à analyser (le balayage parallèle pouvant être assuré par un balayage électronique linéaire du faisceau émis).

Le PCS (écarts entre les points d'émergence des traducteurs 100) est optimisé pour l'épaisseur de pièce P en tenant compte des caractéristiques de faisceaux et, dans le cas de contrôle de soudure, de la largeur des cordons de soudure ainsi que des dimensions de traducteurs.

Par rapport à une technique TOFD conventionnelle, le système conforme à la présente invention permet de générer des phénomènes physiques d'interaction (en regard de l'orientation des fronts d'ondes et des pressions acoustiques en jeux) différents en TOFD sectoriel focalisé tel qu'illustré sur les figures 2 et 3, complémentaires en Pulse écho focalisé tel qu'illustré sur la figure 4 et équivalents en TOFD large champ tel qu'illustré sur les figures 5 et 6.

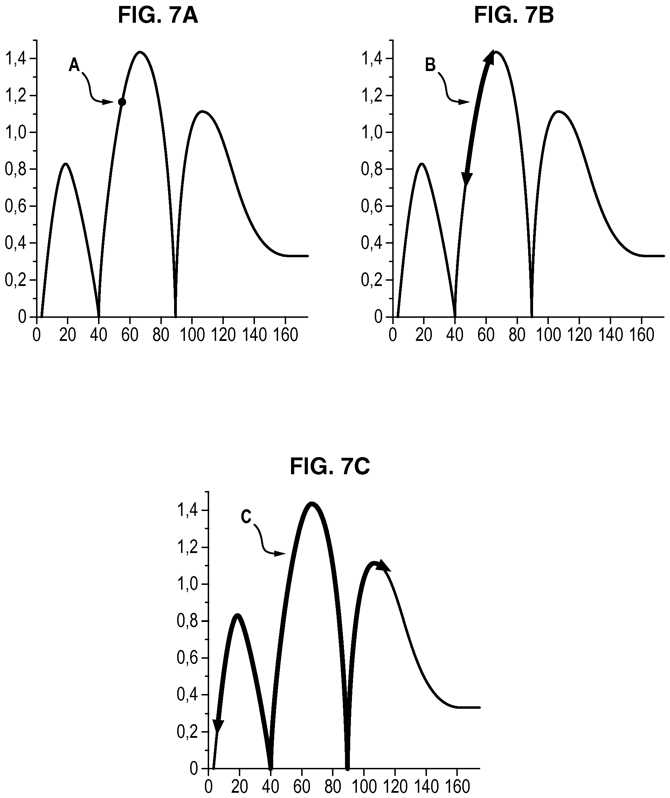

Les phénomènes de diffraction exploités dans le cadre de la présente invention diffèrent grandement de ceux utilisés jusqu'à présent. Ils peuvent être expliqués par des approches analytiques à partir d'expressions mathématiques découlant de la Théorie Générale de la Diffraction (TGD$_{2D\ ou\ 3D}$). En effet comme le montre la fig 7A, en TOFD conventionnel seul un point (A) de la courbe est exploité alors que comme le montrent les figures 7B et 7C l'invention permet d'exploiter tout ou partie de la courbe (C ou B selon le type de balayage) au maximum d'énergie. Plus précisément un balayage anti-parallèle (perpendiculaire à la direction de propagation du faisceau, réalisé mécaniquement) permet de couvrir la plage B illustrée sur la figure 7B tandis qu'un balayage parallèle (parallèle à la direction de propagation du faisceau et piloté de manière électronique par commande des multiéléments ou de manière mécanique par translation physique des traducteurs) permet de couvrir la plage C plus étendue illustrée sur la figure 7C.

Cette différence fondamentale et décisive dans le cadre de la présente invention, par rapport à l'état de la technique, peut être résumée par le tableau ci-dessous :

|  | Exploitation de la courbe de diffraction | Garantie de l'Exploitation optimale de l'énergie du faisceau émis |
|---|---|---|
| TOFD standard Anti // | Limitée (point A) | Non |
| Technique selon invention avec balayage Anti// | Plus étendue que l'état de la technique (portion B) | Oui |
| TOFD standard Anti // et // | Limitée (point A) | Oui |

(suite)

|  | Exploitation de la courbe de diffraction | Garantie de l'Exploitation optimale de l'énergie du faisceau émis |
|---|---|---|
| Technique selon invention avec balayage Anti//et // | Optimale (portion C) | Oui |

On peut par exemple considérer que en milieu isotrope, pour une arête de défaut plan de faible ouverture, l'amplitude (Hdiff) d'un signal de diffraction (LL) peut être définie par rapport à la réponse d'un réflecteur cylindrique de référence (génératrice de trou « dg »).

L'on peut écrire :

(1) l'amplidude Hdiff = $2*(\lambda/dg)1/2 *C *\Delta$ *avec*

(2) le facteur de forme :

$$C = \sqrt{\frac{a}{2.(a - PS_{LL} * \cos(\beta))}}$$

(3) Le coefficient de diffraction :

$$\Delta(\beta) = \frac{\sin\frac{\beta}{2}.\left(\sin\frac{\beta}{2}.A^2(\beta) + C^2(\beta).E(\beta)\right)}{F(\beta).G(\beta).K(k_L\cos(\beta))^2}$$

avec $\lambda$ = longueur d'onde,

$\beta$ = angle d'incidence du faisceau OL,

dg = diamètre du réflecteur de référence

a = rayon local de courbure du défaut

$PS_{LL}$ = parcours sonore des ondes longitudinales.

Les approches Kirchhoff et Théorie Générale de la Diffraction montrent que l'amplitude du signal de diffraction est fonction de l'incidence du faisceau.

Le modèle TGD 2D projette les directions d'incidence et d'observation dans le plan orthogonal au bord diffractant du défaut (les coefficients TGD dépendent uniquement de l'angle d'observation).

Les coefficients TGD 3D décrivent sans approximation la désorientation 3D des arrêtes diffractantes.

Les moyens conformes à la présente invention offrent un dispositif et un procédé de contrôle non destructif novateurs en ce qu'ils combinent une technologie hybride, multiéléments à l'émission et monoélément à la réception, exploitant les phénomènes de diffraction ultrasonore de manière inédite.

L'innovation proposée par la présente invention réside en effet dans la combinaison particulière d'une part de formation du faisceau d'émission (responsable des phénomènes d'interaction) et d'autre part de réception des signaux (responsable des imageries spécifiques et combinées).

L'électronique de pilotage 300 permet d'activer et de stocker simultanément les données d'acquisitions en transmission (TOFD) et en Pulse Echo afin d'étendre l'exploitation des phénomènes de diffraction. Une interface associée permet de disposer de données synchronisées pulse échos et TOFD (par exemple à l'aide de curseurs de lecture interdépendants).

La présente invention peut être exploitée principalement pour le contrôle de soudures. Cependant elle n'est pas limitée à cette application particulière et peut s'appliquer d'une manière générale au contrôle non destructif de tout type de matériau par identification et localisation de défauts.

Le dispositif et le procédé conformes à la présente invention combinent la puissance et la diversité des champs d'application des technologies multiéléments avec la fiabilité des technologies conventionnelles.

Robustes et flexibles, le dispositif et le procédé conformes à la présente invention permettent de répondre en limitant les plans de sondage aux besoins de performances de nombreux secteurs industriels (tels que chaudronnerie, tubiste, pétrochimie, nucléaire, ferroviaire, aéronautique) cherchant de hauts niveaux de qualité de fabrication ou de suivi en service. La présente invention permet notamment de réduire les fausses alarmes et/ou de justifier l'absence de défaut nocif dans des composants, ou par exemple des structures d'équipements à joints soudés.

Notamment, lorsque la présente invention est mise en oeuvre à partir de balayages antiparallèles, elle donne accès :

a) En TOFD sectoriel :

- à une compilation de D-scan résultants d'interactions

  - fortement énergétiques sur toute l'épaisseur (effet de la focalisation à l'émission) sur un volume réduit,
  - d'incidences variables dans l'épaisseur,

- à un renforcement des phénomènes de diffraction vis à vis des effets spéculaires,
- à une optimisation de la résolution et du pouvoir séparateur du fait de la focalisation à l'émission et du maintien des effets d''amortissement du récepteur céramique,
- à une réduction de la zone morte à proximité des parois (du fait de la focalisation.

b) En pulse écho focalisé :

- à la disponibilité d'une imagerie S-scan résultant d'interactions d'Ondes Longitudinales fortement énergétiques sur toute l'épaisseur (effet de la focalisation),
- à un positionnement dans le volume de signaux issus de phénomènes spéculaire et/ou de phénomènes de diffraction,
- à la disponibilité de propagation d'ondes rampantes favorables à la détection spéculaire de défaut débouchant ou sub-surface côté paroi de sondage.

Le dispositif et le procédé conformes à la présente invention facilitent le traitement des données TOFD avec une meilleure résolution des signaux et offre le moyen d'affiner le traitement d'indication (et donc les diagnostics) en situation complexe. En ce sens, les facilités d'interprétation et la nature des données disponibles grâce à la présente invention permettent d'améliorer les capacités d'expertise.

Les moyens conformes à la présente invention permettent en particulier les avantages suivants vis-à-vis de l'état de la technique :

- étendre le périmètre d'exploitation des phénomènes de diffraction du TOFD standard (interaction à front d'ondes unique) par la disponibilité de multiples champs de diffraction (notamment dans le cas de balayage parallèles).
- améliorer les performances de détection aux abords des surfaces.
- améliorer la résolution spatiale du TOFD pseudo-conventionnel à base de sondes multiéléments et la discrimination de défauts ponctuels/défauts étendus.
- renseigner la localisation axiale des indications.
- améliorer la précision de mesure de longueur des indications.
- limiter le niveau de bruit (notamment électronique) et les gains nécessaires à la visualisation des signaux de diffraction.
- limiter les besoins de traitement au voisinage de l'onde latérale (linéarisation, suppression).
- limiter les fausses alarmes.

Selon un exemple particulier appliqué sur acier carbone et non limitatif de réalisation conforme à la présente invention :

- Les traducteurs émetteurs multiéléments sont de type sonde linéaire de 64 éléments piézo-composites travaillant à une fréquence centrale de 5MHz avec une bande passante de 60%, associés à un sabot Olympus de type SA2-N60I en rexolyte pour une génération d'ondes longitudinales avec une incidence à 60°.
- Les traducteurs récepteurs monolithiques sont de type céramique de forme rectangulaire travaillant à une fréquence centrale de 5MHz avec une bande passante de 140% pour une incidence ondes longitudinales de 60°.

L'on rappelle ici que la bande passante telle que définie suivant la norme EN12668-2 est égale à $\Delta f = f_u - fl$, relation dans laquelle $f_u - fl$ désignent respectivement la fréquence supérieure et la fréquence inférieure du spectre de fréquence mesuré à -6dB.
La bande passante relative, calculée en pourcentage, est égale à $\Delta f_{rel} = (\Delta f/f_o) \times 100$, relation dans laquelle $f_o$ désigne la fréquence centrale $f_o = (f_u - fl)^{1/2}$.

En regard de la figure 7 annexée, l'on notera que alors que les techniques TOFD classiques ne permettent d'exploiter qu'une plage limitée, en termes d'incidences, de phénomènes de diffraction (tête/pied), correspondant aux sommets des pics illustrés, la présente invention permet grâce à l'application de faisceaux présentant des incidences différentes, de couvrir des plages d'exploitation beaucoup plus importantes couvrant quasi totalement toute la largeur desdits pics.

L'on peut établir le tableau comparatif suivant d'avantages résultant de la présente invention, par rapport à l'état de la technique :

| | TOFD classique avec émetteur monoélément et récepteur monoélément | TOFD avec émetteur multiéléments Phased Array sectoriel et récepteur multiéléments Phased Array sectoriel | Invention : TOFD avec émetteur multiéléments Phased Array sectoriel et récepteur monoéléments à large bande passante |
|---|---|---|---|
| Propagation du faisceau (émission) | Divergent (faible densité d'énergie). Tension d'excitationélevée. | Focalisé avec déviation angulaire (haute densité d'énergie). Tension d'excitation faible. | Focalisé avec déviation angulaire (haute densité d'énergie). Tension d'excitation faible. |
| Interaction | Grande variation d'énergie. Front d'ondes plan et unitaire. | Faible variation d'énergie. Fronts d'ondes plans et pluriels (différents dans l'épaisseur). | Faible variation d'énergie. Fronts d'ondes plans et pluriels (différents dans l'épaisseur). |
| Réception | Large bande passante. Faible résolution latérale. Haute résolution en profondeur. Différentiel de sensibilité entre phénomènes de diffraction et spéculaire : moyen. | Moyenne bande passante. Forte résolution latérale. Faible résolution en profondeur. Différentiel de sensibilité entre phénomènes de diffraction et spéculaire : élevé. | Large bande passante. Forte résolution latérale. Haute résolution en profondeur. Différentiel de sensibilité entre phénomènes de diffraction et spéculaire : élevé dû à la divergence. |
| Imagerie et analyse (B/S scan) | Unique/statique. Fort pouvoir de séparation. | Multiple/dynamique. Faible pouvoir de séparation. | Multiple/dynamique. Fort pouvoir de séparation. |
| Inconvénients et avantages | Inconvénients : Problématiques sur balayage anti-parallèle. Zones mortes (abords ondes latérales et abord écho de fond). Imprécision de localisation axiale et en profondeur. Mauvaise discrimination des réflecteurs (pouvoir séparateur, nature, artefact). Multiple passages requis (balayages déportés et dispositifs). Exploitation limitée de la courbe de diffraction. Difficultés sur géométrie complexe (mise en oeuvre et interprétation) . | Inconvénients : Problématiques sur balayage anti-parallèle. Design complexe de sondes. Résolution spatiale (bande passante faible). Imprécision de localisation axiale et en profondeur. Dégradation de l'imagerie (faible tension d'excitation et faible amortissement des sondes). Gestion des lois et stockage des données. Exploitation limitée de la courbe de diffraction. | Avantages : Diminution des zones mortes. Amélioration de la localisation (axiale et profondeur) et mesures (hauteur et longueur) des indications. Amélioration du diagnostic (détection, discrimination, localisation, classification). RSB (puissance moyenne du signal sur variance du bruit : important. Exploitation étendue de la courbe de diffraction. |

L'on rappelle que :

- la terminologie A scan désigne une représentation d'un signal monodimensionnel obtenue lorsqu'un tir ultrasonore est réalisé pour une position donnée d'un couple émetteur/récepteur, sous forme de l'amplitude des échos enregistrés par le récepteur en fonction du temps,
- la terminologie B scan est une image engendrée par la succession de A scan selon une direction principale de balayage d'une surface contrôlée, par exemple le long d'un cordon de soudure,
- la terminologie C scan désigne la cartographie obtenue à partir de signaux A scan en effectuant une projection sur un plan parallèle à la surface contrôlée, du maximum relevé sur les signaux A scan associé à chaque position de capteurs et
- la terminologie D scan, désigne conventionnellement la cartographie obtenue en projetant le maximum relevé des A scan sur une surface orthogonale à la surface contrôlée, par exemple transversalement à la direction longitudinale d'un cordon de soudure.

BIBLIOGRAPHIE

TOFD conventionnel

Normes européennes

Générales :

- NF EN 1330-4 juillet 2000 - END - Terminologie - Partie 4 : termes utilisés en contrôle ultrasonore
- NF EN 583-6 Février 2009 : END - Contrôle ultrasonore - Partie 6 : Technique de diffraction du temps de vol utilisée comme méthode de détection et de dimensionnement des discontinuités
- NF EN 12668-2 Octobre 2001 : END - Caractérisation et vérification de l'appareillage de contrôle par ultrasons Partie 2 : Traducteurs
- BS 7709 1993 : Guide to calibration and setting -up of the ultrasonic time of flight diffraction (TOFD) technique for the detection, location and sizing of flaws

Soudures :

- XP CEN/TS 14751 janvier 2005 - Soudage - Utilisation de la technique de diffraction des temps de vol (méthode TOFD) pour le contrôle des soudures
- NF EN 15617 mai 2009 - Essais non destructifs des assemblages soudés - Technique de diffraction des temps de vol (méthode TOFD) - Niveaux d'acceptation
- NEN 1822 april 2005- Acceptance criteria for Time of Flight Diffraction inspection technique

Normes Américaines:

- ASTM E 2373 - 2009 - Standard Practice for Use of the Ultrasonic Time of Flight Diffraction (TOFD) Technique
- Code CASE 2235-9 - 2005 - Use of ultrasonic examination in lieu of radiography section I; section VIII, Division 1 and 2; and section XII
- ASME section V, section VIII, section XI, section XII - 2007 - intégration du code CASE directement dans les sections

Autres:

- Engineering Application of Ultrasonic Time of Flight Diffraction par JP Charlesworth & JAG Temple - 2ème édition 2007
- Main Issues of European TOFDPROOF Project par D. Chauveau, D. Flotte, C. Boucher - ECNDT 2006

- TOFDPROOF - Recommendations for TOFD Certification par TOFDPROOF Consortium - 2005
- TOFDPROOF - Final report - Effective application of TOFD method for weld inspection at the manufacturing stage of pressure vessels" TOFDPROOF Consortium - 2005
- Influence de l'algorithme de linéarisation de l'onde latérale sur l'interprétation des images TOFD - D. Flotte, D. Chauveau - Institut de Soudure - journées COFREND Toulouse 2008
- TOFD en pratique - 2009 - SNCT et CETIM
- Projet ALTER X - 2009 - Institut de Soudure (Total, Technip, GRT Gaz, EDF)
- The 2nd International Conférence on Technical Inspection and NDT (TINDT2008) - October 2008 - tehran, Iran - A study of Time-of-Flight Diffraction Technique Using Photoelastic Visualisation - Edward Ginzel, Farhang Honarvar and Amin Yaghootian
- 17th World Conférence on Nondestructive Testing, 25-28 Oct 2008, Shanghai, China - TOFD Inspection with Phased Arrays - Charles Brillon, Tim Armitt and Olivier Dupuis
- SAFT und TOFD - Ein Vergleich im Analyseverhalten von Reflektoren - J. Kitze, D. Brackrock, G. Brekow, J. Prager, M. Gaal, M. Kreutzbruck, D. Szabo, K. Kuti, G. Paczolay
- 17th World Conférence on Nondestructive Testing, 25-28 Oct 2008, Shanghai, China - TOFD-Scan Imaging Based on Synthetic Aperture Focusing Technique - Zicheng Wang, Youpeng Zhou, Jianxin Tian
- SAFT- und TOFE-Auswertung für die Ultraschall-Schweipnahtprufung von langsnahtgeschweipten Groprohren - Hans Rieder, Alexander Dillhofer, Martin Spies, Alftred Graff, Thomas Orth, Thomas Kersting
- WO03/106994

## Revendications

1. Dispositif de contrôle ultrasonore non destructif comprenant au moins une paire de traducteurs constituée d'un émetteur multiéléments (100) excité en mode Phased Array conçu pour couvrir un secteur angulaire adapté à la couverture de zone sur l'épaisseur d'une pièce à inspecter et d'un récepteur monoélément (200) présentant une bande passante supérieure à 80 %, ladite bande passante étant égale à $\Delta f = f_u - f_l$, relation dans laquelle $f_u$ et $f_l$ désignent respectivement la fréquence supérieure et la fréquence inférieure du spectre de fréquence mesuré à -6dB, d'une mécanique de balayage associée à la paire de traducteurs (100, 200) et adaptée pour translater la paire de traducteurs perpendiculairement à la direction de propagation d'un faisceau d'ondes ultrasons généré par l'émetteur multiéléments (100), et d'un système électronique (300) adapté pour piloter l'émetteur multiéléments (100) et le récepteur monoélément (200) et adapté pour opérer un balayage sectoriel du faisceau focalisé (100) dans le sens de la propagation du faisceau, de façon à générer sur un défaut des interactions multi incidences, exploitant un mode écho et un mode TOFD (time of flight diffraction) sectoriel focalisé.

2. Dispositif selon la revendication 1, **caractérisé par le fait que** le récepteur monoélément (100) présente une bande passante supérieure à 110%.

3. Dispositif selon l'une des revendications 1 ou 2, **caractérisé par le fait que** l'émetteur multiéléments (100) est adapté pour générer des faisceaux d'ondes ultrasonores sous incidence oblique, couvrant une plage de l'ordre de 45°.

4. Dispositif selon l'une des revendications 1 à 3, **caractérisé par le fait qu'**il est adapté pour opérer un balayage du faisceau de l'émetteur multiéléments (100), de manière mécanique.

5. Dispositif selon l'une des revendications 1 à 4, **caractérisé par le fait qu'**il est adapté pour opérer un balayage mécanique du faisceau de l'émetteur multiéléments (100) dans le sens de la propagation.

6. Dispositif selon l'une des revendications 1 à 5, **caractérisé par le fait que** l'émetteur multiéléments (100) est adapté pour émettre un faisceau d'ultrasons possédant un front d'onde présentant, dans la zone d'intérêt, une puissance constante sur sa section, formé de préférence d'un faisceau cylindrique ou un faisceau ovaloïde.

7. Dispositif selon l'une des revendications 1 à 6, **caractérisé par le fait qu'**il comprend plusieurs paires de traducteurs (100, 200).

8. Dispositif selon l'une des revendications 1 à 7, **caractérisé par le fait que** des traducteurs (100, 200) sont en vis-à-vis, du même côté d'une zone analysée.

9. Dispositif selon l'une des revendications 1 à 8, **caractérisé par le fait que** des traducteurs (100, 200) sont sur des côtés opposés de cette zone à analyser.

10. Dispositif selon l'une des revendications 1 à 9, **caractérisé par le fait que** la sonde émettrice (100) est formée par la combinaison d'une part d'une pluralité d'éléments piézo-composites et d'un sabot portant la sonde et permettant de générer les incidences souhaitées de l'onde émise dans la pièce à contrôler.

11. Dispositif selon l'une des revendications 1 à 10, **caractérisé par le fait que** l'émetteur multiéléments (100) est adapté pour générer des faisceaux d'ondes longitudinales focalisés (110) présentant une largeur dans le plan de propagation de l'ordre de 2 à 3mm, par exemple sous forme d'une tache focale idéalement cylindrique présentant un diamètre de l'ordre de 2 à 3mm dans la zone d'intérêt.

12. Dispositif selon l'une des revendications 1 à 11, **caractérisé par le fait que** l'émetteur multiéléments (100) est adapté pour générer des faisceaux d'ondes longitudinales focalisés avec un recouvrement, typiquement avec un pas de l'ordre de 2mm.

13. Dispositif selon l'une des revendications 1 à 12, **caractérisé par le fait que** le traducteur récepteur monolithique à ondes longitudinales (200) présente une fréquence équivalente à la fréquence centrale de l'émetteur (100), un amortissement à bande passante supérieur à 110%, une incidence moyenne de 55°, une divergence dans le plan de propagation de l'ordre de 50° et une moindre ouverture dans le plan perpendiculaire au plan de propagation.

14. Procédé mettant en oeuvre un dispositif conforme à l'une des revendications précédentes, comportant au moins une paire de traducteurs constituée d'un émetteur multiéléments (100) et d'un récepteur monoélément amorti à bande passante supérieure à 80% (200), lequel procédé comprend les étapes consistant à piloter, à l'aide d'un système électronique (300), les traducteurs précités de sorte que :

- l'émetteur multiéléments (100) est excité en mode Phased Array conçu pour couvrir un secteur angulaire adapté à la couverture de zone sur l'épaisseur d'une pièce à inspecter, et l'émetteur multiéléments émette un faisceau d'ultrasons convergent possédant un front d'onde présentant une puissance constante sur sa section, déplacé électroniquement en mode sectoriel dans le sens de la propagation du faisceau de façon à générer sur un défaut des interactions multi-incidences, exploitant un mode écho et un mode TOFD sectoriel focalisé et
- le récepteur monoélément (200) reçoive les ondes ultrasonores provenant de la zone d'intérêt à analyser et résultant du faisceau d'ultrasons émis par l'émetteur multiéléments (100), lequel procédé comprend en outre l'étape de translater la paire de traducteurs perpendiculairement à la direction de propagation d'un faisceau d'ondes ultrasonores généré par l'émetteur multiéléments.

15. Procédé selon la revendication 14, **caractérisé par le fait qu'**il comprend en outre une étape consistant à assurer simultanément et/ou séquentiellement à la réception précitée par le récepteur monoélément (200), des étapes d'émission et de réception par l'émetteur multiéléments (100) correspondant à un mode de fonctionnement en mode pulse écho.

16. Procédé selon l'une des revendications 14 ou 15, **caractérisé par le fait qu'**il comprend en outre une étape au cours de laquelle l'émetteur multiéléments (100) fonctionne en émettant des faisceaux combinés équivalent à un TOFD champ large (120) et le récepteur monoélément (200) à large ouverture (210) reçoit les ondes ultrasonores provenant de la zone d'intérêt à analyser et résultant du faisceau d'ultrasons à champ large (120) émis par l'émetteur multiéléments (100).

17. Procédé selon l'une des revendications 14 à 16, **caractérisé par le fait que** la zone analysée est une soudure ou le matériau de base d'une pièce.

**Patentansprüche**

1. Vorrichtung zur zerstörungsfreien Ultraschallprüfung, umfassend mindestens ein Prüfkopf-Paar, bestehend aus einem Mehrelement-Sender (100), der im Phased Array-Modus erregt wird, der dafür ausgelegt ist, einen Winkelsektor abzudecken, der zur Flächendeckung über die Dicke eines zu untersuchenden Werkstücks eingerichtet ist, und aus einem Einzelelement-Empfänger (200), der eine Bandbreite von größer als 80 % aufweist, wobei die Bandbreite gleich $\Delta f = f_u - f_l$ ist, wobei in dieser Gleichung $f_u$ und $f_l$ jeweils die obere Frequenz und die untere Frequenz des bei -6 dB gemessenen Frequenzspektrums bezeichnen, aus einer Abtastmechanik, die dem Prüfkopfpaar (100, 200) zugeordnet und dafür eingerichtet ist, das Prüfkopfpaar senkrecht zur Ausbreitungsrichtung eines von dem Mehrelement-Sender (100) erzeugten Ultraschallwellenbündels zu translatieren, und aus einem elektronischen System (300), das dafür eingerichtet ist, den Mehrelement-Sender (100) und den Einzelelement-Empfänger (200) zu steuern und dafür eingerichtet ist, eine sektorielle Abtastung des fokussierten Bündels (100) in der Richtung der Ausbreitung des Bündels derart vorzunehmen, dass über einem Fehler Wechselwirkungen mit mehreren Einfallswinkeln erzeugt werden, wobei ein Echomodus und ein fokussierter sektorielle TOFD- (Time of Flight Diffraktion) Modus genutzt werden.

2. Vorrichtung gemäß Anspruch 1, **dadurch gekennzeichnet, dass** der Einzelelement-Empfänger (100) eine Bandbreite von größer als 110 % aufweist.

3. Vorrichtung gemäß einem der Ansprüche 1 oder 2, **dadurch gekennzeichnet, dass** der Mehrelement-Sender (100) dafür eingerichtet ist, Ultraschallwellenbündel mit schrägem Einfallswinkel zu erzeugen, die einen Bereich in der Größenordnung von 45° abdecken.

4. Vorrichtung gemäß einem der Ansprüche 1 bis 3, **dadurch gekennzeichnet, dass** sie dafür eingerichtet ist, eine Abtastung des Bündels des Mehrelement-Senders (100) in mechanischer Weise vorzunehmen.

5. Vorrichtung gemäß einem der Ansprüche 1 bis 4, **dadurch gekennzeichnet, dass** sie dafür eingerichtet ist, eine mechanische Abtastung des Bündels des Mehrelement-Senders (100) in der Richtung der Ausbreitung vorzunehmen.

6. Vorrichtung gemäß einem der Ansprüche 1 bis 5, **dadurch gekennzeichnet, dass** der Mehrelement-Sender (100) dafür eingerichtet ist, ein vorzugsweise von einem zylindrischen Bündel oder einem ovalen Bündel gebildetes Ultraschallbündel auszusenden, das eine Wellenfront besitzt, die im interessierenden Bereich eine konstante Leistung über ihren Querschnitt aufweist.

7. Vorrichtung gemäß einem der Ansprüche 1 bis 6, **dadurch gekennzeichnet, dass** sie mehrere Prüfkopfpaare (100, 200) umfasst.

8. Vorrichtung gemäß einem der Ansprüche 1 bis 7, **dadurch gekennzeichnet, dass** Prüfköpfe (100, 200) auf der gleichen Seite eines analysierten Bereichs einander gegenüberliegen.

9. Vorrichtung gemäß einem der Ansprüche 1 bis 8, **dadurch gekennzeichnet, dass** Prüfköpfe (100, 200) auf entgegengesetzten Seiten dieses zu analysierenden Bereichs liegen.

10. Vorrichtung gemäß einem der Ansprüche 1 bis 9, **dadurch gekennzeichnet, dass** die Sendesonde (100) von der Kombination eines Teils einer Vielzahl von Piezokompositelementen und einem Schuh gebildet wird, der die Sonde trägt, und es ermöglicht, die gewünschten Einfallswinkel der in das zu prüfende Werkstück ausgesendeten Welle zu erzeugen.

11. Vorrichtung gemäß einem der Ansprüche 1 bis 10, **dadurch gekennzeichnet, dass** der Mehrelement-Sender (100) dafür eingerichtet ist, fokussierte Longitudinalwellenbündel (110) zu erzeugen, die eine Breite in der Ausbreitungsebene in der Größenordnung von 2 bis 3 mm aufweisen, zum Beispiel in der Form eines idealerweise zylindrischen Brennflecks, der einen Durchmesser in der Größenordnung von 2 bis 3 mm im interessierenden Bereich aufweist.

12. Vorrichtung gemäß einem der Ansprüche 1 bis 11, **dadurch gekennzeichnet, dass** der Mehrelement-Sender (100) dafür eingerichtet ist, fokussierte Longitudinalwellenbündel mit einer Überlappung, typischerweise mit einer Teilung in der Größenordnung von 2 mm zu erzeugen.

13. Vorrichtung gemäß einem der Ansprüche 1 bis 12, **dadurch gekennzeichnet, dass** der monolithische Longitudinalwellen-Empfängerprüfkopf (200) eine Frequenz, die der Mittenfrequenz des Senders (100) gleich ist, eine Dämpfung, mit einer Bandbreite von größer als 110 %, einen mittleren Einfallswinkel von 55°, eine Abweichung in der Ausbreitungsebene in der Größenordnung von 50° und eine kleinere Öffnung in der Ebene senkrecht zur Ausbreitungsebene aufweist.

14. Verfahren zur Anwendung einer Vorrichtung nach einem der vorhergehenden Ansprüche, umfassend mindestens ein Prüfkopf-Paar, das aus einem Mehrelement-Sender (100) und aus einem gedämpften Einzelelement-Empfänger mit einer Bandbreite von größer als 80 % (200) besteht, wobei das Verfahren die Schritte umfasst, die darin bestehen, mithilfe eines elektronischen Systems (300) die vorgenannten Prüfköpfe derart zu steuern, dass

- der Mehrelement-Sender (100) im Phased Array-Modus erregt wird, der dafür ausgelegt ist, einen Winkelsektor abzudecken, der zur Flächendeckung über die Dicke eines zu untersuchenden Werkstücks eingerichtet ist, und der Mehrelement-Sender ein konvergierendes Ultraschallbündel aussendet, das eine Wellenfront besitzt, die über ihren Querschnitt eine konstante Leistung aufweist, die im sektoriellen Modus elektronisch in der Richtung der Ausbreitung des Bündels derart bewegt wird, dass über einem Fehler Wechselwirkungen mit mehreren Einfallswinkeln erzeugt werden, wobei ein Echomodus und ein fokussierter sektorielle TOFD-Modus genutzt werden, und
- der Einzelelement-Empfänger (200) die Ultraschallwellen empfängt, die aus dem zu analysierenden interessierenden Bereich stammen und aus dem von dem Mehrelement-Sender (100) ausgesendeten Ultraschallbündel resultieren, wobei das Verfahren weiter den Schritt des Translatierens des Prüfkopfpaares senkrecht zur Ausbreitungsrichtung eines von dem Mehrelement-Sender erzeugten Ultraschallwellenbündels umfasst.

15. Verfahren gemäß Anspruch 14, **dadurch gekennzeichnet, dass** es weiter einen Schritt umfasst, der darin besteht, gleichzeitig und/oder sequentiell zum vorgenannten Empfang durch den Einzelelement-Empfänger (200) Sende- und Empfangsschritte durch den Mehrelement-Sender (100) sicherzustellen, die einem Betriebsmodus im Impuls-Echo-Modus entsprechen.

16. Verfahren gemäß einem der Ansprüche 14 oder 15, **dadurch gekennzeichnet, dass** es weiter einen Schritt umfasst, in dessen Verlauf der Mehrelement-Sender (100) arbeitet, indem er kombinierte Bündel aussendet, die einer TOFD mit breitem Feld (120) gleichen, und der Einzelelement-Empfänger (200) mit breiter Öffnung (210) die Ultraschallwellen empfängt, die aus dem zu analysierenden interessierenden Bereich stammen und aus dem von dem Mehrelement-Sender (100) ausgesendeten Ultraschallbündel mit breitem Feld (120) resultieren.

17. Verfahren gemäß einem der Ansprüche 14 bis 16, **dadurch gekennzeichnet, dass** der analysierte Bereich eine Schweißung oder das Ausgangsmaterial eines Werkstücks ist.

## Claims

1. Non-destructive ultrasound test device comprising at least one pair of transducers composed of a multi-element transmitter (100) excited in Phased Array mode designed to cover an angular sector adapted to zone coverage on the thickness of the part to be inspected and a single-element receiver (200) with a passband of more than 80%, said passband being equal to $\Delta f = f_u - f_i$, relation in which $f_u$ and $f_i$ designate the upper frequency and lower frequency respectively of the frequency spectrum measured at -6 dB, scanning mechanics associated with the pair of transducers (100, 200) and adapted to translate the pair of transducers perpendicular to the propagation direction of a beam of ultrasound waves generated by the multi-element transmitter (100), and an electronic system (300) adapted to control the multi-element transmitter (100) and the single-element receiver (200) and adapted to operate sectorial scanning of the focussed beam (100) in the direction of propagation of the beam, so as to generate multi-incidence interactions on a defect, using an echo mode and a focalised sectorial TOFD (time of flight diffraction) mode.

2. Device according to claim 1, **characterised by** the fact that the single-element receiver (100) has a passband higher than 110%.

3. Device according to one of claims 1 or 2, **characterised by** the fact that the multi-element transmitter (100) is adapted to generate beams of ultrasound waves with oblique incidence, covering a range of the order of 45°.

4. Device according to one of claims 1 to 3, **characterised by** the fact that it is adapted to mechanically make a scan of the beam of the multi-element transmitter (100).

5. Device according to one of claims 1 to 4, **characterised by** the fact that it is adapted to make a mechanical scan of the beam of the multi-element transmitter (100) along the propagation direction.

6. Device according to one of claims 1 to 5, **characterised by** the fact that the multi-element transmitter (100) is adapted to emit an ultrasound beam with a wave front with constant power on its section in the zone of interest, preferably formed from a cylindrical beam or an ovaloid beam.

7. Device according to one of claims 1 to 6, **characterised by** the fact that it comprises several pairs of transducers (100, 200).

8. Device according to one of claims 1 to 7, **characterised by** the fact that the transducers (100, 200) are facing each other, on the same side of an analysed zone.

9. Device according to one of claims 1 to 8, **characterised by** the fact that the transducers (100, 200) are on opposite sides of this zone to be analysed.

10. Device according to one of claims 1 to 9, **characterised by** the fact that the transmitting probe (100) is formed by the combination of firstly a plurality of piezo-composite elements and a shoe carrying the probe, and capable of generating the required incidences of the wave emitted in the part to be tested.

11. Device according to one of claims 1 to 10, **characterised by** the fact that the multi-element transmitter (100) is adapted to generate beams of focussed longitudinal waves (110) with a width of the order of 2 to 3 mm in the propagation plane, for example in the form of an ideally cylindrical focal spot with a diameter of the order of 2 to 3 mm in the zone of interest.

12. Device according to one of claims 1 to 11, **characterised by** the fact that the multi-element transmitter (100) is adapted to generate beams of focussed longitudinal waves with an overlap, typically with a pitch of 2 mm.

13. Device according to one of claims 1 to 12, **characterised by** the fact that the monolithic receiver transducer with longitudinal waves (200) has a frequency equivalent to the central frequency of the transmitter (100), damping with passband of more than 110%, an average incidence of 55°, a divergence in the propagation plane of the order of 50°, and a smaller aperture in the plane perpendicular to the propagation plane.

14. Method making use of a device according to one of the above claims, comprising at least one pair of transducers composed of a multi-element transmitter (100) and a damped single-element receiver with passband of more than 80% (200), said method includes steps consisting of driving the above-mentioned transducers using an electronic system (300) such that:

   - the multi-element transmitter (100) is excited in Phased Array mode designed to cover an angular sector adapted to zone coverage on the thickness of a part to be inspected, and the multi-element transmitter emits a converging ultrasound beam with a wave front with a constant power across its cross-section, electronically displaced in sectorial mode along the direction of propagation of the beam so as to generate multi-incidence interactions on a defect, using an echo mode and a focalised sectorial mode, and,
   - the single-element receiver (200) receives ultrasound waves from the zone of interest to be analysed and resulting from the ultrasound beam emitted by the multi-element transmitter (100), which process also comprises the step to translate the pair of transducers perpendicular to the direction of propagation of a beam of ultrasound waves generated by the multi-element transmitter.

15. Method according to claim 14, **characterised by** the fact that it also comprises a step consisting of performing simultaneously and/or sequentially with the above-mentioned reception by the single-element receiver (200), emission and reception steps by the multi-element transmitter (100) corresponding to an operating mode in pulse echo mode.

16. Method according to one of claims 14 or 15, **characterised by** the fact that it also comprises a step during which the multi-element transmitter (100) operates by emitting combined beams equivalent to a wide field TOFD (120) and the single-element receiver (200) with wide aperture (210) receives ultrasound waves from the zone of interest to be analysed and resulting from the wide field ultrasound beam (120) emitted by the multi-element transmitter (100).

17. Method according to one of claims 14 to 16, **characterised by** the fact that the analysed zone is a weld or the base material of a part.

# FIG. 1
## Etat de la technique

# FIG. 2

# FIG. 3

**FIG. 4**

**FIG. 5**

**FIG. 6**

### FIG. 7A

### FIG. 7B

### FIG. 7C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0709673 A
- US 20080314153 A
- WO 03106994 A

**Littérature non-brevet citée dans la description**

- **CHARLES BRILLON ; TIM ARMITT ; OLIVIER DU-PUIS.** TOFD Inspection with Phased Arrays. *17th World Conférence on Nondestructive Testing,* 25 Octobre 2008
- **JP CHARLESWORTH ; JAG TEMPLE.** Engineering Application of Ultrasonic Time of Flight Diffraction. 2007
- **D. CHAUVEAU ; D. FLOTTE ; C. BOUCHER.** European TOFDPROOF Project. *ECNDT,* 2006
- *TOFDPROOF - Recommendations for TOFD,* 2005
- TOFDPROOF - Final report - Effective application of TOFD method for weld inspection at the manufacturing stage of pressure vessels. *TOFDPROOF Consortium,* 2005
- **D. FLOTTE ; D. CHAUVEAU.** Influence de l'algorithme de linéarisation de l'onde latérale sur l'interprétation des images TOFD. Institut de Soudure, 2008
- **SNCT ET CETIM.** *TOFD,* 2009
- Projet ALTER X. Institut de Soudure, 2009
- **EDWARD GINZEL ; FARHANG HONARVAR ; AMIN YAGHOOTIAN.** A study of Time-of-Flight Diffraction Technique Using Photoelastic Visualisation. *The 2nd International Conférence on Technical Inspection and NDT (TINDT2008),* Octobre 2008
- **J. KITZE ; D. BRACKROCK ; G. BREKOW ; J. PRAGER ; M. GAAL ; M. KREUTZBRUCK ; D. SZABO ; K. KUTI ; G. PACZOLAY.** *SAFT und TOFD - Ein Vergleich im Analyseverhalten von Reflektoren*
- **ZICHENG WANG ; YOUPENG ZHOU ; JIANXIN TIAN.** TOFD-Scan Imaging Based on Synthetic Aperture Focusing Technique. *17th World Conférence on Nondestructive Testing,* 20081025
- **HANS RIEDER ; ALEXANDER DILLHOFER ; MARTIN SPIES ; ALFTRED GRAFF ; THOMAS ORTH ; THOMAS KERSTING.** *SAFT- und TOFE-Auswertung für die Ultraschall-Schweipnahtprufung von langsnahtgeschweipten Groprohren*